# EUROPEAN PATENT APPLICATION

(11) **EP 4 741 889 A1**
(43) Date of publication of application: **13.05.2026**
(21) Application number: 24839591.5
(22) Date of filing: 02.07.2024
(51) Int. Cl.: G02B 5/22, C04B 35/553

(54) **OPTICAL FILTER AND INFRARED SENSOR AND OPTICAL FILTER MANUFACTURING METHOD**

(30) Priority: 07.07.2023 JP 2023112348
(71) Applicant: Panasonic Intellectual Property Management Co., Ltd., Kadoma-shi, Osaka 571-0057 (JP)
(72) Inventor: SATO Natsuki, Kadoma-shi, Osaka 571-0057 (JP); YOSHIOKA Tatsuro, Kadoma-shi, Osaka 571-0057 (JP); KURIZOE Naoki, Kadoma-shi, Osaka 571-0057 (JP); SAWA Ryosuke, Kadoma-shi, Osaka 571-0057 (JP); SEKINO Tohru, Suita-shi, Osaka 565-0871 (JP); GOTO Tomoyo, Suita-shi, Osaka 565-0871 (JP); CHO Sunghun, Suita-shi, Osaka 565-0871 (JP); SEO Yeongjun, Suita-shi, Osaka 565-0871 (JP)
(74) Representative: Müller-Boré & Partner Patentanwälte PartG mbB
(86) International application number: PCT/JP2024/023939
(87) International publication number: WO 2025/013699

(57) **Abstract**

An optical filter (1) includes a base material (10) containing a continuous phase (11) of a polycrystalline fluoride and an absorbent (20) dispersed in the base material (10); the optical filter (1) contains 0.1 to 10% by mass of the absorbent that absorbs light in an infrared region of more than 7.5 µm, and 9 µm or less; a wavelength bandwidth of the optical filter (1) having a linear transmittance of 30% or more per 1 mm thickness in a target wavelength band of 3 µm or more, and 7 µm or less, is 50 nm or more; a maximum linear transmittance of the optical filter (1) per 1 mm thickness in a target wavelength band of more than 7.5 µm, and 25 µm or less, is 10% or less; the optical filter (1) contains 80% by mass or more of an inorganic substance; the optical filter (1) contains 50% by mass or more of a polycrystalline fluoride; a porosity of the optical filter (1) is 30% or less; and a median pore diameter of the optical filter (1) is 500 nm or less.

## Description

### TECHNICAL FIELD

The present invention relates to an optical filter, an infrared sensor, and a method of manufacturing an optical filter.

### BACKGROUND ART

Conventionally, infrared transmissive windows using inorganic fluoride as a base material have been used for special applications in fields such as academic research and industry, such as window materials for physical and chemical equipment. Patent Literature 1 discloses a Fourier transform infrared spectrophotometer for measuring fluorinated gases in a sample containing corrosive gases, which includes a measuring cell with a cell window composed of one selected from the group consisting of CaF₂, BaF₂, MgF₂, LiF, and ZnSe.

### CITATION LIST

### PATENT LITERATURE

Patent Literature 1: WO 2019/176624

### SUMMARY OF INVENTION

There is known a technology for sensing various gases and flames using an infrared detection element and an optical filter for infrared transmission. However, there is a possibility that the materials mentioned above may transmit even an undesired wavelength, for example, and may not be suitable as an optical filter for an infrared sensor.

The present invention has been made in view of such problems of the prior art. An object of the present invention is to provide an optical filter suitable for an infrared sensor for detecting flames, for example, an infrared sensor using the optical filter, and a method of manufacturing an optical filter.

In order to solve the problem mentioned above, an optical filter according to a first aspect of the present invention includes a base material containing a continuous phase of a polycrystalline fluoride, and an absorbent dispersed in the base material. The optical filter contains 0.1 to 10% by mass of an absorbent that absorbs light in an infrared region of more than 7.5 µm, and 9 µm or less. A wavelength bandwidth of the optical filter having a linear transmittance of 30% or more per 1 mm thickness in a target wavelength band of 3 µm or more, and 7 µm or less, is 50 nm or more. A maximum linear transmittance of the optical filter per 1 mm thickness in a target wavelength band of more than 7.5 µm, and 25 µm or less, is 10% or less. The optical filter contains 80% by mass or more of an inorganic substance. The optical filter contains 50% by mass or more of a polycrystalline fluoride. A porosity of the optical filter is 30% or less. A median pore diameter of the optical filter is 500 nm or less.

An infrared sensor according to a second aspect of the present invention includes an optical filter.

A method of manufacturing an optical filter according to a third aspect of the present invention includes a step of pressurizing a mixture containing a polycrystalline fluoride and an absorbent at a temperature of 250°C or lower. The optical filter contains 0.1 to 10% by mass of the absorbent that absorbs light in an infrared region of more than 7.5 µm, and 9 µm or less. A wavelength bandwidth of the optical filter having a linear transmittance of 30% or more per 1 mm thickness in a target wavelength band of 3 µm or more, and 7 µm or less, is 50 nm or more. A maximum linear transmittance of the optical filter per 1 mm thickness in a target wavelength band of more than 7.5 µm, and 25 µm or less, is 10% or less. The optical filter contains 80% by mass or more of an inorganic substance. The optical filter contains 50% by mass or more of a polycrystalline fluoride. A porosity of the optical filter is 30% or less. A median pore diameter of the optical filter is 500 nm or less.

### BRIEF DESCRIPTION OF DRAWINGS

[FIG. 1] FIG. 1 is a cross-sectional view schematically illustrating an example of an optical filter according to the present embodiment.
[FIG. 2] FIG. 2 is an enlarged schematic cross-sectional view of a part of the optical filter illustrated in FIG. 1.
[FIG. 3] FIG. 3 is a cross-sectional view schematically showing another example of an optical filter according to the present embodiment.
[FIG. 4] FIG. 4 is an enlarged schematic cross-sectional view of a part of the optical filter shown in FIG. 3.
[FIG. 5] FIG. 5 is a cross-sectional view schematically showing an example of an infrared sensor according to the present embodiment.
[FIG. 6] FIG. 6 is an infrared absorption spectrum of the fluororesin used in an example.
[FIG. 7] FIG. 7 is an infrared absorption spectrum of PVDF used in an example.
[FIG. 8] FIG. 8 is a linear transmittance of a test sample according to Example 1.
[FIG. 9] FIG. 9 is a linear transmittance of a test sample according to Example 2.
[FIG. 10] FIG. 10 illustrates the linear transmittance of a test sample according to Example 3.
[FIG. 11] FIG. 11 illustrates the linear transmittance of a test sample according to Example 4.
[FIG. 12] FIG. 12 is secondary electron images of a cross section of a test sample according to Example 1.
[FIG. 13] FIG. 13 is reflected electron images of a cross section of a test sample according to Example 1.
[FIG. 14] FIG. 14 is binarized images of the reflected electron images of FIG. 13.
[FIG. 15] FIG. 15 is an XRD pattern of pulverized powder of a test sample according to each example.

### DESCRIPTION OF EMBODIMENTS

Hereinafter, an optical filter, an infrared sensor, and a method of manufacturing an optical filter according to the present embodiment will be described in detail with reference to the drawings. Note that the dimensional ratios in the drawings are exaggerated for convenience of explanation, and may be different from the actual ratios.

### Optical filter

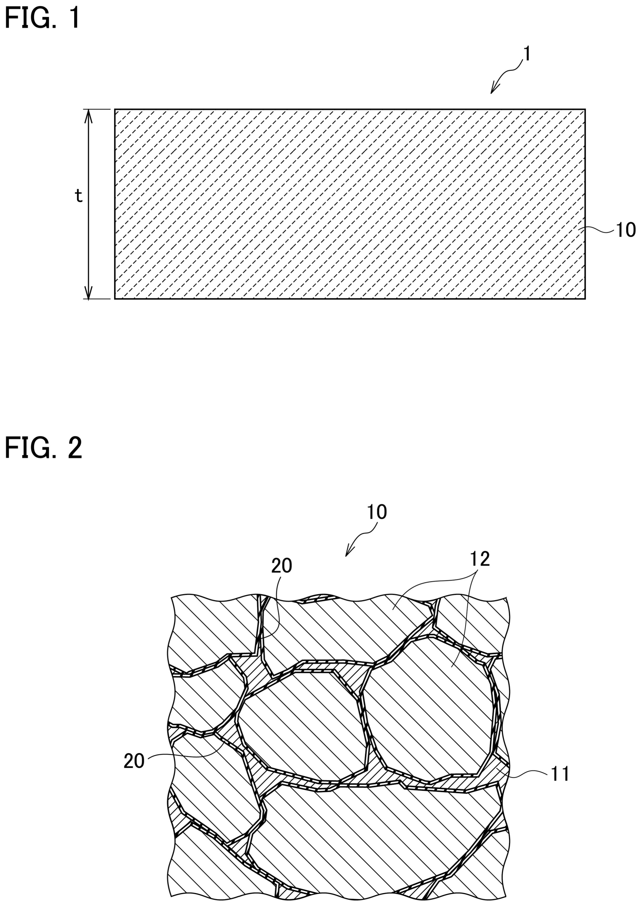

FIG. 1 is a cross-sectional view schematically illustrating an example of an optical filter 1 according to the present embodiment. FIG. 2 is an enlarged cross-sectional view schematically illustrating a part of the optical filter 1 in FIG. 1. As illustrated in FIGS. 1 and 2, the optical filter 1 according to the present embodiment includes a base material 10 and an absorbent 20. The base material 10 includes a continuous phase 11 of a polycrystalline fluoride. The optical filter 1 according to the present embodiment is a ceramic structure.

The fluoride may include at least one of an alkali metal or an alkaline earth metal. The alkali metal may contain at least one metal selected from the group consisting of lithium, sodium, potassium, rubidium and cesium. The alkaline earth metal may contain at least one metal selected from the group consisting of magnesium, calcium, strontium and barium.

The fluoride may contain a complex fluoride containing an alkali metal. The complex fluoride may contain, for example, at least one alkali metal selected from the group consisting of lithium, sodium, potassium, rubidium, and cesium. The alkali metal fluoride has high solubility in water, but the complex fluoride containing the alkali metal has low solubility in water. The solubility of the alkali metal fluoride in 100 g of water at 25°C is, for example, 0.134 g for LiF, 4.13 g for NaF, 102 g for KF, 300 g for RbF and 573 g for CsF. The solubility of the alkali metal-containing complex fluoride in 100 g of water at 25°C is, for example, 0.042 g for Na₃AlF₆ and 0.025 g for NaMgF₃. Therefore, the optical filter 1 using the alkali metal-containing complex fluoride has higher water resistance as compared with the alkali metal fluoride.

The complex fluoride may contain fluorine, an alkali metal, and an additional metal as main components. The additional metal may contain at least one metal selected from the group consisting of an alkaline earth metal, aluminum, gallium, indium, zinc and yttrium. The alkali earth metal may contain at least one metal selected from the group consisting of magnesium, calcium, strontium, and barium. Anisotropy of refractive index of the complex fluoride is low, so that the transmittance of infrared light can be improved. Further, an inorganic substance containing the metal elements can easily form the optical filter 1 by a pressurized heating method as described below. Here, the main component means that the total content of fluorine, alkali metal, and additional metal contained in the complex fluoride is 80% or more in a molar ratio. The total content may be 85% or more, 90% or more, 95% or more, or 100%.

Specifically, the complex fluoride may contain at least one of A₃AlF₆ and ABF₃ (in the composition formula, A represents one or more of the alkali metals described above, and B represents one or more of the alkaline earth metals described above). The A₃AlF₆ may contain, for example, at least one selected from the group consisting of Li₃AlF₆, Li₂NaAlF₆, Li₂KAlF₆, Na₃AlF6, Na₂LiAlF₆, Na₂KAlF₆, K₃AlF₆, K₂LiAlF₆, and K₂NaAlF₆. ABF₃ may contain, for example, at least one selected from the group consisting of LiMgF₃, NaMgF₃, KMgF₃, LiCaF₃, NaCaF₃, and KCaF₃. More specifically, the complex fluoride may contain at least one selected from the group consisting of Na₃AlF₆, K₂NaAlF₆, and NaMgF₃.

The complex fluoride may contain a compound having a cryolite crystal structure. Examples of the complex fluoride having a cryolite crystal structure include Na₃AlF₆ and K₂NaAlF₆. The complex fluoride may have a perovskite crystal structure. Examples of the complex fluoride having a perovskite crystal structure include NaMgF₃. The complex fluoride having such crystal structure exhibits low refractive index anisotropy due to crystal orientation, and is preferable from the viewpoint of infrared transmission.

The complex fluoride may contain fluorine, an alkali metal, and aluminum as main components. Here, the main component means that the total content of fluorine, alkali metal, and aluminum contained in the complex fluoride is 80% or more in molar ratio. The total content may be 85% or more, 90% or more, 95% or more, or 100%. The complex fluoride may contain, for example, sodium hexafluoroaluminate (Na₃AlF₆). Na₃AlF₆ is also known as a component of cryolite. Anisotropy of refractive index of Na₃AlF₆ is small. Therefore, the complex fluoride has excellent transmittance of infrared light.

The complex fluoride may be partially substituted by a hydroxide ion or an oxide ion. For example, in the case of liquid-phase synthesized complex fluoride particles, a portion of the complex fluoride ion may be substituted by at least either a hydroxide ion or an oxide ion. When the complex fluoride contains a hydroxyl group, the hydroxyl group absorbs infrared light of a specific wavelength. Therefore, the sensor sensitivity can be improved by cutting unnecessary wavelengths using the filter. When the optical filter 1 contains a hydroxyl group, the change in transmittance due to humidity is reduced, and the sensor is not easily affected by humidity.

The optical filter 1 contains 80% by mass or more of an inorganic substance. Therefore, it is possible to obtain the optical filter 1 which does not easily deteriorate with the passage of time and has high infrared transmittance as compared with the case where a resin is used. The inorganic substance contains the fluoride described above. The optical filter 1 may contain 85% by mass or more, 90% by mass or more, or 95% by mass or more of an inorganic substance. The optical filter 1 may contain 99.9% by mass or less of an inorganic substance.

The optical filter 1 contains 50% by mass or more of a polycrystalline fluoride. The polycrystalline fluoride is excellent from the viewpoint of gas barrier property or durability. Further, the characteristics of the fluoride can be easily utilized for the optical filter 1 containing 50% by mass or more of the polycrystalline fluoride. The rate of portions of the optical filter 1 having different refractive indices decreases due to the high rate of the fluoride, so that light scattering is mitigated and infrared transmittance of the optical filter 1 can be enhanced. The rate of the fluoride in the optical filter 1 may be 60% by mass or more, 70% by mass or more, 80% by mass or more, 90% by mass or more, or 95% by mass or more.

As illustrated in FIG. 2, the base material 10 may include a plurality of fluoride particles 12. The plurality of fluoride particles 12 may be dispersed in the base material 10. The continuous phase 11 may exist between adjacent fluoride particles 12. The continuous phase 11 may bind the plurality of fluoride particles 12. The continuous phase 11 may be in direct contact with the fluoride particles 12. The continuous phase 11 may cover at least a part of the surface of the plurality of the fluoride particles 12, or may cover the entire surface of the plurality of fluoride particles 12. The plurality of fluoride particles 12 may be bonded to each other. The fluoride particles 12 may be in point contact with each other, or may be in surface contact in which the surfaces of the fluoride particles 12 are in contact with each other.

The fluoride particles 12 may be composed of a substance similar to the fluoride constituting the continuous phase 11 as described above. The inorganic substance constituting the fluoride particles 12 may be crystalline or amorphous. The inorganic substance constituting the fluoride particles 12 is preferably crystalline from the viewpoint of gas barrier property or durability. The inorganic substance constituting the fluoride particles 12 is preferably amorphous from the viewpoint of light transmittance. In the case of crystalline, the fluoride particles 12 may be monocrystalline or polycrystalline.

The average particle diameter of the plurality of fluoride particles 12 may be 10 nm or more, and 50 µm or less. When the average particle diameter of the fluoride particles 12 is 50 µm or less, the light transmittance of the optical filter 1 increases. Further, when the average particle diameter of the fluoride particles 12 is within this range, the fluoride particles 12 are firmly bonded to each other, and the strength of the optical filter 1 can be enhanced. Further, when the average particle diameter of the fluoride particles 12 is within this range, the rate of pores existing inside the optical filter 1 is 30% or less, as will be described below. Moreover, the size of pores generated between the fluoride particles 12 decreases, so that the strength of the optical filter 1 can be enhanced. The average particle diameter of the plurality of fluoride particles 12 may be preferably 10 µm or less, more preferably 2 µm or less, particularly preferably 1 µm or less, and most preferably 500 nm or less. The average particle diameter of the plurality of fluoride particles 12 may be, for example, 1 nm or more, or 10 nm or more from the view point of light transmittance of the optical filter 1. In the present specification, unless otherwise mentioned, the value of the "average particle diameter" is calculated as an average value of particle diameters of particles observed in several to several tens of fields of view using an observation means such as a scanning electron microscope (SEM) or a transmission electron microscope (TEM).

The optical filter 1 may contain impurities produced in the course of production. The impurities may be, for example, raw materials for producing the fluoride and may contain elements constituting the fluoride. The elements contained in the impurities may contain, for example, at least one element selected from the group consisting of fluorine, an alkali metal, and the additional metals described above. The impurities may contain chalcogen compounds containing oxides composed of one of metal elements, halides, hydroxides, nitrides, or carbides. The impurities may be crystalline or amorphous.

The refractive index difference between the fluoride and the impurities described above may be 0.1 or less. When the refractive index difference is 0.1 or less, scattering of light can be mitigated to obtain the optical filter 1 with high transmittance. The lower limit of the refractive index difference is not particularly limited. The refractive index difference may be 0.08 or less, or 0.04 or less.

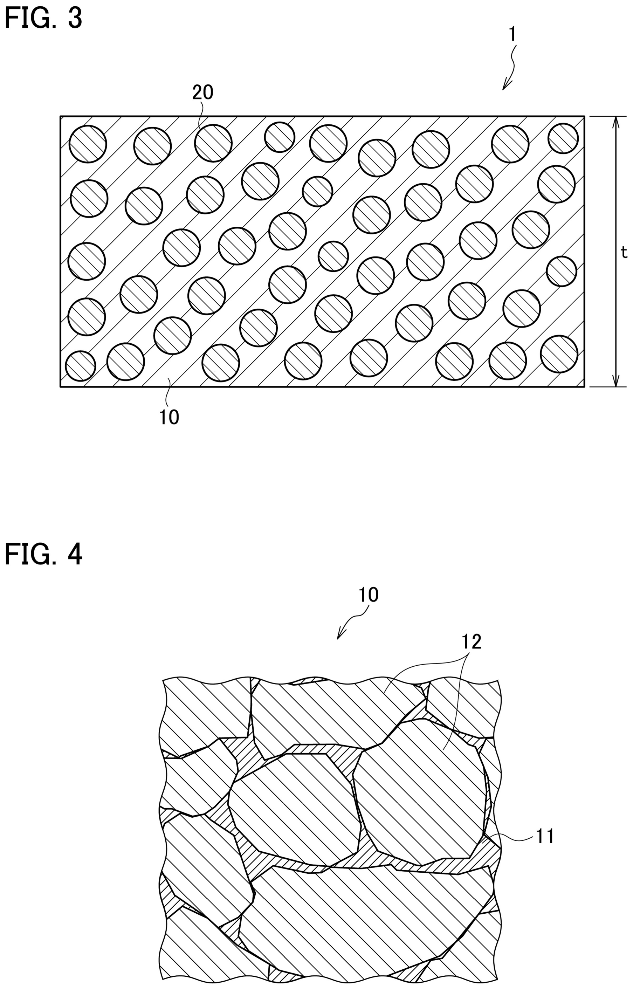

The absorbent 20 is dispersed in the base material 10. As illustrated in FIG. 2, the absorbent 20 may be a film covering the surface of the fluoride particles 12. Further, as illustrated in FIG. 3, the absorbent 20 may be a particle. As illustrated in FIG. 4, the absorbent 20 need not be a film covering the surface of the fluoride particles 12. Further, the absorbent 20 may include a film covering the surface of the fluoride particles 12 as illustrated in FIG. 2 and particles as illustrated in FIG. 3. Further, the absorbent 20 may be uniformly dispersed in the continuous phase 11.

The absorbent 20 absorbs light in an infrared region more than 7.5 µm, and 9 µm or less. By absorbing light in the infrared region, light having a wavelength that cannot be shielded by the fluoride can be cut. Therefore, it is possible to provide the optical filter 1 that can shield light having a wavelength in a specific region that causes noise, for example.

The absorbent 20 may include a fluororesin. The fluororesin is also referred to as a fluoropolymer. The fluororesin has a C-F bond, and absorbs light in a wavelength band of 8 µm to 9 µm, so that the fluororesin can cut light in a specific wavelength region as described above. The fluororesin may include, for example, at least one selected from the group consisting of resins including perfluoroalkyl groups, polytetrafluoroethylene (PTFE), polychlorotrifluoroethylene (PCTFE), polyvinylidene fluoride (PVDF), polyvinyl fluoride (PVF), perfluoroalkoxy fluororesin (PFA), tetrafluoroethylene-hexafluoropropylene copolymer (FEP), ethylene-tetrafluoroethylene copolymer (ETFE), and ethylene-chlorotrifluoroethylene copolymer (ECTFE). In particular, a resin including a perfluoroalkyl group, and polyvinylidene fluoride (PVDF), have many C-F bonds, so that they can effectively cut light in a specific wavelength region.

When the absorbent 20 is a particle, the absorbent 20 may have an average particle diameter of 4 µm or less. When the absorbent 20 has an average particle diameter of 4 µm or less, a high mechanical strength of the optical filter 1 can be maintained. The absorbent 20 may have an average particle diameter of 1 µm or less, or 0.1 µm or less. The lower limit of the average particle diameter of the absorbent 20 is not particularly limited, but the average particle diameter of the absorbent 20 may be 1 nm or more. The average particle diameter of the absorbent 20 may be 1 µm or more, or 10 µm or more.

The content of the absorbent 20 in the optical filter 1 is 0.1% by mass or more, and 10% by mass or less. When the content of the absorbent 20 is 0.1% by mass or more, the amount of light absorbed by the optical filter 1 can be increased. When the content of the absorbent 20 is 10% by mass or less, the mechanical characteristics of the optical filter 1 can be improved. The content of the absorbent 20 may be 0.5% by mass or more, 1% by mass or more, 2 parts by mass or more, or 3 parts by mass or more. The content of the absorbent 20 may be 6% by mass or less, 4% by mass or less, 3 parts by mass or less, or 2 parts by mass or less.

The optical filter 1 may contain an organic substance such as resin particles, for example, in addition to the absorbent 20. As described below, the optical filter 1 can be obtained by pressurizing while heating to 100 to 300°C, so that a member having low heat resistance can be added to the optical filter 1. Further, the optical filter 1 is not limited to a member having low heat resistance such as an organic substance, but may contain an inorganic compound other than fluoride and impurities in order to impart functionality.

The porosity in a cross section of the optical filter 1 is 30% or less. That is, the porosity of pores exceeding 0 nm in the cross section of the optical filter 1 may be 30% or less. Specifically, when the cross section of the optical filter 1 is observed, the average value of the rate of pores per unit area is 30% or less. When the porosity is 30% or less, the pores inside the optical filter 1 are reduced, so that a solidified body having high strength is obtained. The porosity in the cross section of the optical filter 1 is preferably 20% or less, more preferably 10% or less, and even more preferably 5% or less. As the porosity in the cross section of the optical filter 1 becomes smaller, cracks originating from the pores are reduced, so that the strength of the optical filter 1 can be enhanced. Furthermore, as the porosity in the cross section of the optical filter 1 becomes smaller, light scattering by the pores is reduced, so that the transmittance of the optical filter 1 can be enhanced.

In this specification, the porosity can be obtained as follows. First, the cross section of the optical filter 1 is observed, and the pores and portions other than the pores are discriminated. Then, the area of the pores in the unit area is measured, and the rate of the pores per unit area is obtained. The porosity is an average value of the rate of the pores per unit area obtained at a plurality of locations. When the cross section of the optical filter 1 is observed, an optical microscope, a scanning electron microscope (SEM) or a transmission electron microscope (TEM) can be used. The unit area and the area of pores in the unit area may be measured by binarizing an image observed by a microscope.

The median pore diameter of the optical filter 1 is 500 nm or less. When the median pore diameter is 500 nm or less, scattering of light due to the pores is mitigated, so that the optical filter 1 having a high transmittance is obtained. The median pore diameter is preferably 300 nm or less, more preferably 200 nm or less, and even more preferably 100 nm or less. In this specification, the median pore diameter means the pore diameter when the cumulative value of the pore diameter distribution on an area basis is 50%. The pore diameter means the diameter of a perfect circle when the shape of the pores in the cross section of the optical filter 1 is assumed to be a perfect circle.

The optical filter 1 has infrared light transmittance. The optical filter 1 may have a wavelength bandwidth in which the linear transmittance is not less than a predetermined value in a target wavelength band. The linear transmittance of the optical filter 1 can be obtained by measuring it in a transmission method using a Fourier transform infrared spectroscopy (FT-IR) device. The linear transmittance of the infrared transmission spectrum is converted based on the Lambert-Veil law so that the linear transmittance at a thickness of 1 mm is obtained. The wavelength bandwidth can be obtained by measuring a wavelength bandwidth in which the linear transmittance is more than or equal to a predetermined value in a target wavelength band. The wavelength bandwidth may be a wavelength bandwidth in which the linear transmittance is continuously more than or equal to a predetermined value, or the wavelength bandwidth may be a total wavelength bandwidth of wavelength bandswidths in which the linear transmittance is continuously and intermittently more than or equal to a predetermined value. That is, the wavelength bandwidth is a total wavelength bandwidth in which the linear transmittance is more than or equal to a predetermined value in a target wavelength band. Therefore, when the linear transmittance intermittently exceeds a predetermined value, the wavelength bands in which the linear transmittance exceeds the predetermined value may be separated from each other in the target wavelength band. Note that the wavelength bandwidth is preferably a wavelength bandwidth in which the linear transmittance continuously exceeds the predetermined value.

In the target wavelength band of 3 µm or more 7 or less, the wavelength bandwidth in which the linear transmittance per 1 mm thickness of the optical filter 1 is 30% or more is 50nm or more. Such an optical filter 1 can be suitable for an infrared sensor for detecting, for example, flames. Note that the target wavelength band may be 3.4 µm or more, or 3.8 µm or more. The target wavelength band may be 6 µm or less, 5 µm or less, or 4.4 µm or less. The linear transmittance may be 40% or more, or 50% or more. The linear transmittance may be 100% or less. The wavelength bandwidth may be 0.5 µm or more, 1 µm or more, 1.5 µm or more, or 2 µm or more. The wavelength bandwidth may be 4 µm or less, or 3 µm or less.

In the target wavelength band more than 7.5 µm, and 25 µm or less, the maximum linear transmittance per 1 mm thickness of the optical filter 1 is 10% or less. Such an optical filter 1 has excellent shielding characteristics in the target wavelength band, and is suitable for an infrared sensor for detecting, for example, flames. Note that the maximum linear transmittance means the highest linear transmittance in the target wavelength band.

The optical filter 1 may be an infrared transmission filter. By using the optical filter 1 as an infrared transmission filter, it is possible to provide an infrared sensor, a light emitting device, and the like that can reduce irregular reflection of infrared light due to pores. When the optical filter 1 is a single layer and can transmit light in a specific infrared region, it is possible to transmit specific infrared light without laminating a plurality of dielectrics or separately providing a light shielding filter to improve sensor sensitivity, for example, like an interference filter.

A thickness t of the optical filter 1 is 10 µm or more. The optical filter 1 according to the present embodiment is formed in a pressurized heating method, as will be described below. Therefore, a bulk body having a thickness of 10 µm or more can be easily formed without forming the optical filter 1 by laminating thin films. Note that the thickness of the optical filter 1 may be 100 µm or more, 500 µm or more, 1 mm or more, or 1 cm or more. The upper limit of the thickness of the optical filter 1 is not particularly limited, but may be, for example, 50 cm.

When the optical filter 1 is used as an infrared transmission filter, the shape of the optical filter 1 is not particularly limited. The optical filter 1 may have a shape of a flat plate, a concave lens, or a convex lens. When the optical filter 1 has a lens shape, it is possible to cause light rays to be incident perpendicularly on a dielectric laminated bandpass filter, so that the dependence of the dielectric laminated bandpass filter on the incident angle of light rays can be canceled. Further, a fine structure having an antireflection function may be formed on the surface of the optical filter 1.

### [Infrared Sensor]

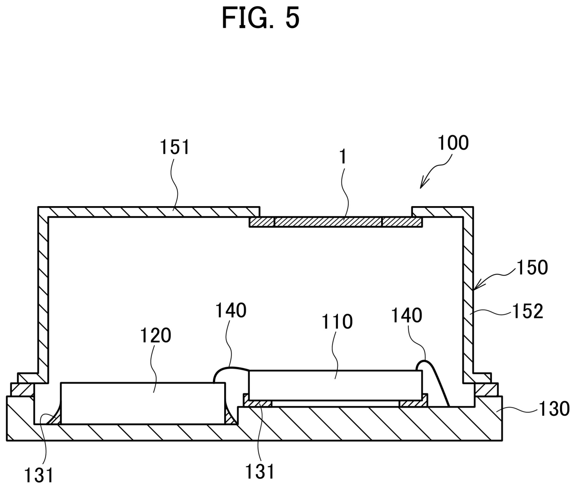

Next, an infrared sensor 100 according to the present embodiment will be described with reference to FIG. 5. As illustrated in FIG. 5, the infrared sensor 100 includes the optical filter 1 described above. The infrared sensor 100 also includes an infrared detection element 110, an IC element 120, a substrate 130, and a metal case 150.

The infrared detection element 110 and the IC element 120 are mounted on the substrate 130 by a die bond material 131. The infrared detection element 110 and the IC element 120 are electrically connected to each other by a wire 140. The infrared detection element 110 is connected to an electric circuit wiring (not illustrated) of the substrate 130 by the wire 140.

The infrared detection element 110 receives infrared light, converts thermal energy of the received infrared light into electric energy, and outputs an electric signal corresponding to the amount of the received infrared light to the IC element 120. The infrared detection element 110 can be a thermal infrared detection element such as a pyroelectric element, a thermopile type infrared detection element and a bolometer type infrared detection element, or a quantum type infrared detection element.

The IC element 120 includes an amplifier circuit for amplifying an electric signal output from the infrared detection element 110, and a determination circuit for determining that a flame exists when the electric signal amplified by the amplifier circuit exceeds a threshold value.

The metal case 150 is attached to the substrate 130. The infrared detection element 110 and the IC element 120 are surrounded by the metal case 150. The infrared detection element 110 and the IC element 120 are sealed by the substrate 130 and the metal case 150. The metal case 150 includes an upper wall 151 and a side wall 152. The upper wall 151 is provided with an opening, and the opening is covered with the optical filter 1. The optical filter 1 is arranged to face the infrared detection element 110, and the infrared detection element 110 is arranged on the substrate 130 to receive infrared rays passing through the optical filter 1. The side wall 152 connects an edge of the upper wall 151 and a edge of the substrate 130.

The infrared rays emitted from a flame or the like pass through the optical filter 1, and are received by the infrared detection element 110. The infrared detection element 110 outputs an electric signal corresponding to the amount of received infrared rays to the IC element 120. The IC element 120 determines whether a flame exists or not according to the electric signal. In this way, the infrared sensor 100 can detect a flame by using the infrared rays emitted from the flame.

Note that gas molecules such as inorganic gases such as SO₂, CO₂, PH₃, N₂O, and NO have characteristic absorption properties in the mid-infrared region. Further, the gas molecules emit corresponding infrared rays at high temperatures. Therefore, the optical filter 1 according to the present embodiment can be used as a sensor not only for CO₂ but also for other gases having characteristic absorption properties in the infrared region. Specifically, the optical filter 1 according to the present embodiment is useful as an infrared transmission window due to a high infrared transmittance.

The present embodiment describes an example of the infrared sensor 100 used as a flame sensor for detecting flames, but the use of the infrared sensor 100 is not limited to the embodiment. The infrared sensor 100 can also be used for a human sensor, a biological sensor, a crime prevention sensor, a gas sensor, a non-contact thermometer, a solid-state imaging device, a camera module, and the like.

### [Method of Manufacturing Optical filter]

Next, a method of manufacturing the optical filter 1 according to the present embodiment will be described. The optical filter 1 can be manufactured by pressurizing and heating a raw material containing fluoride particles. By using such a pressurized heating method, the fluoride particles are bonded to each other while being deformed, so that the optical filter 1 having a small porosity can be formed.

The fluoride described above can be used. The fluoride may be a crystal, and the optical filter 1 can be manufactured by pressurizing a mixture containing a polycrystal of the fluoride and an absorbent. The present embodiment describes an example of complex fluoride particles used as the fluoride particles. The raw material containing the complex fluoride particles may be produced by a method including a step of generating a plurality of complex fluoride particles, a step of separating the complex fluoride particles, and a step of heating the complex fluoride particles.

Specifically, in the step of generating a plurality of complex fluoride particles, the complex fluoride particles are prepared by mixing and reacting a first metal compound, which is alkali metal fluoride, with a second metal compound different from the fluoride. The method of mixing the alkali metal fluoride and the second metal compound is not particularly limited, and a dry mixing or wet mixing method may be used. The solutions may be mixed by adding a second metal compound solution to the alkali metal fluoride solution, or the solutions may be mixed by adding an alkali metal fluoride solution to the second metal compound solution. Alternatively, both solutions may be simultaneously mixed in equal amounts by using a microchannel or the like. For example, water may be used as a solvent.

The concentration of a mixture of the alkali metal fluoride and the second metal compound can be adjusted, as appropriate. The concentration of the alkali metal fluoride may be 30mM or more, or 50mM or more. The concentration of the alkali metal fluoride may be 1000mM or less. The concentration of the second metal compound may be 20mM or more, or 40mM or more. The concentration of the second metal compound may be 200mM or less. The larger the concentration of the raw materials, the smaller the particle diameter tends to be, so that transmittance of the optical filter 1 can be improved.

Examples of alkali metals contained in the alkali metal fluoride include lithium, sodium, potassium, rubidium, and cesium. Specifically, the alkali metal fluoride may contain at least one alkali metal selected from the group consisting of lithium fluoride, sodium fluoride, potassium fluoride, rubidium fluoride, and cesium fluoride.

The second metal compound may be at least one selected from the group consisting of metal chloride, metal nitrate, metal sulfate and metal organic acid salt, and may include metal salt excluding metal fluoride. The metal contained in the second metal compound may be at least one selected from the group consisting of alkaline earth metals, aluminum, gallium, indium, zinc, and yttrium. The second metal compound may contain, for example, aluminum chloride.

In the step of separating complex fluoride particles, the plurality of produced complex fluoride particles are separated. Alkali metal chlorides, nitrates, sulfates, and metal organic acid salts are produced as by-products in addition to the complex fluoride during mixture of the alkali metal fluoride and the second metal compound when the second metal compound is a metal chloride, a metal nitrate, a metal sulfate, or a metal organic acid salt. Therefore, a washing operation to remove the by-products may be carried out. The alkali metal compound may be removed, for example, by washing with a solvent such as water during filtration or centrifugation.

In the heating step, a plurality of separated complex fluoride particles are heated at 200°C or higher. By setting the heating temperature to 200°C or higher, the water content inside the complex fluoride particles decreases. As a result, the absorption of infrared light by the hydroxyl groups and water inside the optical filter 1 decreases, and the transmittance of the optical filter 1 can increase. The heating temperature of the complex fluoride particles may be 300°C or higher, 350°C or higher, or 400°C or higher. The heating temperature of the complex fluoride particles may be 900°C or lower, 800°C or lower, 700°C or lower, 600°C or lower, or 550°C or lower. The heating time of the complex fluoride particles may be 0.5 hours or more, 1 hour or more, or 1.5 hours or more. The heating time of the complex fluoride particles may be 24 hours or less, 12 hours or less, 6 hours or less, or 3 hours or less.

In the method of producing the complex fluoride powder, after removing by-products, as necessary, and separating the complex fluoride particles, the complex fluoride particles may be dried. The drying temperature is not particularly limited, but the complex fluoride particles may be dried at a temperature equal to or lower than the melting point of the complex fluoride. The drying temperature may be, for example, 40°C or higher, 80°C or higher, 100°C or higher, or 200°C or higher. The drying temperature may be, for example, 600°C or lower, 400°C or lower, 300°C or lower, or 200°C or lower. The drying time of the complex fluoride particles may be 0.5 hours or more, 1 hour or more, or 1.5 hours or more. The drying time of the complex fluoride particles may be 24 hours or less, 12 hours or less, 6 hours or less, or 3 hours or less.

The raw material may contain hydrated water in addition to the complex fluoride. The raw material may also contain by-products such as single fluoride containing a single metal element, oxide and hydroxide as unavoidable impurities.

Next, the raw material containing the complex fluoride particles and the absorbent is filled inside the mold. If necessary, the raw material may contain a solvent such as water. The content of water in the raw material may be 1 mass% or more, 5 mass% or more, 10 mass% or more, or 15 mass% or more. The content of water in the raw material may be 80 mass% or less, 70 mass% or less, or 60 mass% or less. After filling the raw material into the mold, the mold may be heated if necessary. Then, by applying pressure to the raw material inside the mold, the inside of the mold becomes a highpressure state. At this time, the complex fluoride particles are densified, and simultaneously, the complex fluoride particles are bonded to each other.

The heating and pressurizing conditions are not particularly limited as long as the densification of the complex fluoride particles proceeds. For example, it is preferable that the raw material is heated to 50 to 300°C, and then pressurized at a pressure of 10 to 600 MPa. The temperature at which the raw material is heated is preferably 80 to 250°C, and more preferably 100 to 200°C. The pressure during pressurizing the raw material is preferably 50 to 600 MPa.

The optical filter 1 can be obtained by taking out the molded product from the inside of the mold. It is considered that by pressurizing the raw material containing the complex fluoride particles containing at least either the hydroxyl group or the water molecule while heating, the complex fluoride particles react with each other via the hydroxyl group or the water molecule to form the continuous phase 11 of the polycrystal of the complex fluoride containing the alkali metal. Thus, the optical filter 1 described above can be formed.

By the reaction caused by pressurizing and heating as described above, the optical filter 1 having a dense structure can be obtained. Further, as a method of forming an aggregate of inorganic particles, a method of forming a compact by pressing only powder of inorganic particles and then sintering at a high temperature (for example, 1700°C or higher) can be considered. However, even if the compact of inorganic particles is sintered at a high temperature, there will be many pores in the optical filter 1 to be obtained, which not only causes insufficient mechanical strength but also causes insufficient transmittance due to scattering of light. In addition, when the inorganic particles are sintered at a high temperature, precise temperature control is required, which increases the production cost.

In the method of manufacturing the optical filter 1 according to the present embodiment, the raw material containing complex fluoride particles, which contains at least one of a hydroxyl group or a water molecule, is pressurized while heating, so that the optical filter 1 having a high density and excellent transmittance can be obtained. Furthermore, in the method of manufacturing the optical filter 1 according to the present embodiment, the optical filter 1 can be obtained by pressurizing while heating at 50°C to 300°C, so that precise temperature control is not required, and the production cost can be reduced.

As described above, the method of manufacturing the optical filter 1 according to the present embodiment includes a step of pressurizing and heating a raw material containing complex fluoride and an absorbent. According to the method of manufacturing the optical filter 1 of the present embodiment, the optical filter 1 described above can be produced in a simple low-temperature process.

It should be noted that the method of manufacturing the optical filter 1 is not limited to the method described above. The optical filter 1 can also be manufactured by pressurizing and heating a raw material containing, for example, first fluoride particles containing an alkali metal, second fluoride particles containing a metal different from the alkali metal, an absorbent, and a solvent such as, for example, water. When using such a pressurizing and heating method, the fluoride particles are bonded to each other while forming complex fluoride, so that the optical filter 1 having a small porosity can be formed. The optical filter 1 can also be manufactured by pressurizing and heating a raw material containing, for example, sodium fluoride (NaF), aluminum fluoride, an absorbent, and water.

The optical filter 1 can also be manufactured by pressurizing and heating a raw material containing complex fluoride particles, first fluoride particles containing an alkali metal, second fluoride particles containing a metal different from the alkali metal, an absorbent, and a solvent such as water.

### Examples

Hereinafter, the present embodiment will be described in more detail with reference to Examples and Comparative Examples, but the present embodiment is not limited to the Examples.

### Example 1

First, sodium hexafluoroaluminate (Na₃AlF₆) was synthesized. Specifically, an aqueous sodium fluoride solution was prepared by dissolving 6.047 g of sodium fluoride (NaF) powder (Fujifilm Wako Pure Chemical Corporation, Reagent Special Grade) in 500 mL of ion-exchanged water. An aqueous aluminum chloride solution was prepared by dissolving 4.3457 g of aluminum chloride (AlCl₃·6H₂O) powder (Fujifilm Wako Pure Chemical Corporation, Reagent Special Grade) in 100 mL of ion-exchanged water. An aqueous solution of sodium fluoride and an aqueous solution of aluminum chloride were mixed and stirred at 25°C for 20 hours. The stirred liquid was filtered by suction using a membrane filter with a pore size of 0.1 µm, and the residue was dried and crushed in an agate mortar to obtain dry powder. The dried powder was calcined at 400°C for 2 hours to obtain Na₃AlF₆ powder containing polycrystalline Na₃AlF₆ as the main phase.

A mixed powder of Na₃AlF₆ and a fluororesin was obtained by immersing 1 g of the synthesized Na₃AlF₆ powder in 5 mL of a fluororesin-containing liquid (KTS-3000HL, manufactured by AGC Seimi Chemical Co., Ltd.), filtering by suction, and drying the mixed liquid. The fluororesin contained in the fluororesin-containing liquid is a resin including a perfluoroalkyl group.

Next, 0.12 g of the mixed powder and 12 µL of ion-exchanged water were mixed and charged into a cylindrical mold (Φ8) having an internal space. The mixture was heated and pressurized at 150°C and 400 MPa for 10 minutes to obtain a cylindrical sample. The cylindrical sample was further dried at 150°C for 2 hours to obtain a test sample of this example.

When a thermogravimetry (TG) was performed on the obtained test sample that is ground in an agate mortar, the weight loss rate between 200°C and 400°C was about 3.9%. Therefore, the fluororesin content of the test sample was about 3.9% by mass. TG was measured by placing a 10 mg test sample in an aluminum container, flowing air at a rate of 50 mL/min, and heating from 100°C to 600°C at a rate of 10°C/min.

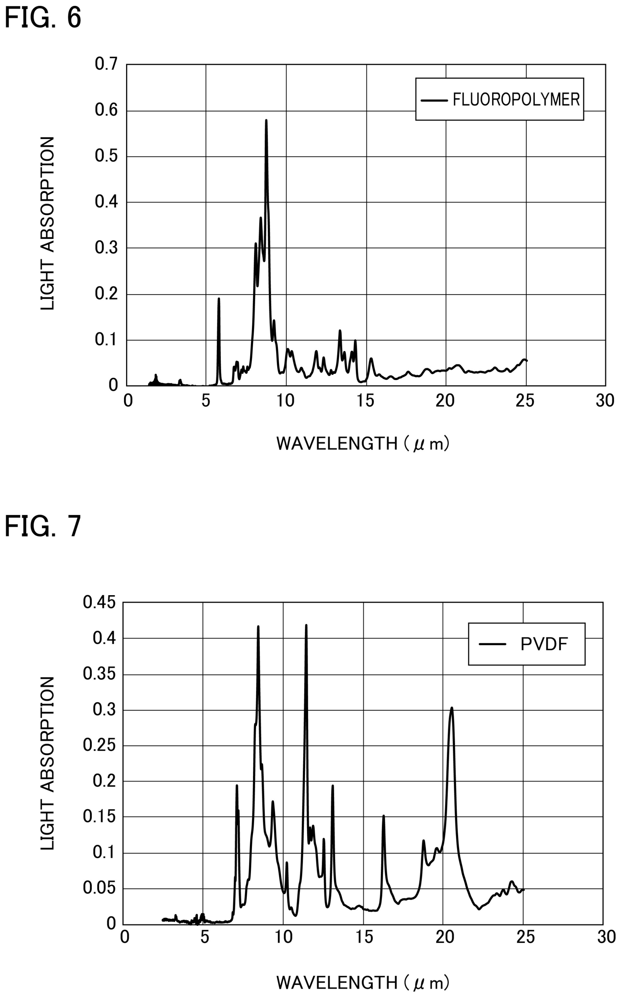

The fluororesin obtained by drying the fluororesin-containing liquid was measured in a transmission method using an FT-IR device. As illustrated in FIG. 6, the fluororesin absorbed light in the infrared region of more than 7.5 µm and 9 µm or less.

### Example 2

A test sample was obtained in the same manner as in Example 1, except that KTS-3000HL was diluted 2-fold with a solvent (SFCOAT SCV Solvent) as the fluororesin-containing liquid of Example 1. The weight loss rate between 200°C and 400°C was measured in the same manner as in Example 1, and was 1.7%. Therefore, the fluororesin content of the test sample of Example 2 was 1.7% by mass.

### Example 3

A mixture of 0.12 g of sodium hexafluoroaluminate (Na₃AlF₆) synthesized in the same manner as in Example 1, 0.003 g of PVDF powder (manufactured by Sigma-Aldrich Co.), and 0.12 g of ion-exchanged water was charged into a cylindrical mold (Φ8) having an internal space. The average particle diameter of the PVDF particles contained in the PVDF powder was about 200 nm. The mixture was heated and pressurized at 150°C and 400 MPa for 10 minutes to obtain a cylindrical sample. The cylindrical sample was further dried at 150°C for 2 hours to obtain a test sample of this example. The PVDF content calculated from the mass of the test sample and the mixture rate of PVDF was about 2.4% by mass.

The PVDF powder was measured in a transmission method using an FT-IR device. As illustrated in FIG. 7, the PVDF powder absorbed light in the infrared region of more than 7.5 µm, and 9 µm or less.

### Example 4

First, sodium hexafluoroaluminate (Na₃AlF₆) was synthesized in the same manner as in Example 1 except that a firing temperature was set to 300°C. Next, a mixture of 0.12 g of the synthesized sodium hexafluoroaluminate (Na₃AlF₆), 0.0015 g of PVDF powder (manufactured by Sigma-Aldrich Co.) and 0.12 g of ion-exchanged water was charged into a cylindrical mold (Φ8) having an internal space. Then, a cylindrical sample was prepared under the same conditions as in Example 3. The PVDF content calculated from the mass of the test sample and the mixture rate of PVDF was about 1.2% by mass.

### Linear Transmittance

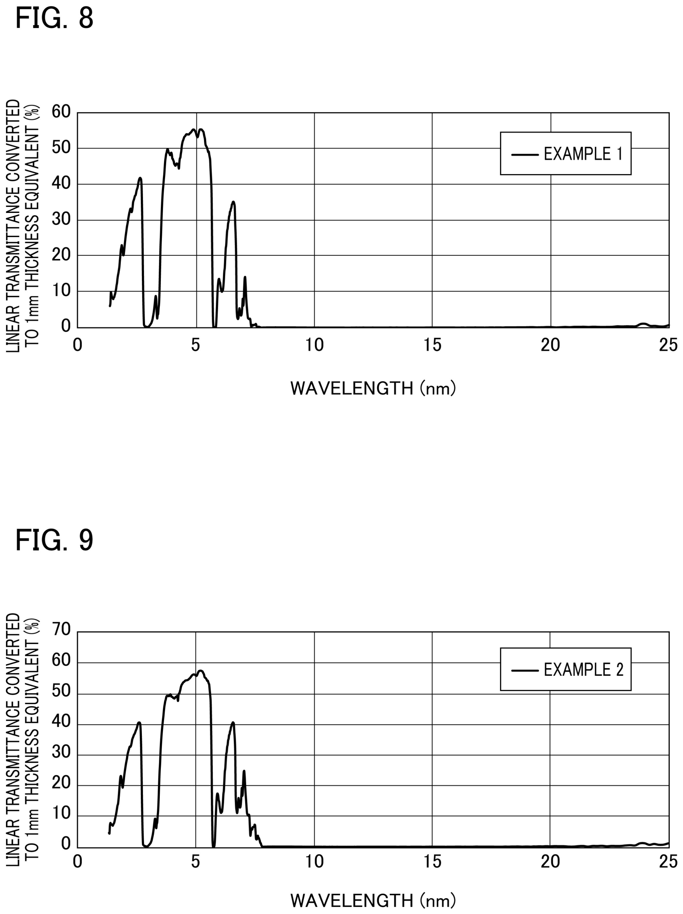

Each test sample was measured in a transmission method using an FT-IR device, and infrared transmission spectra were obtained. The results are illustrated in FIGS. 8 to 11. The linear transmittance of the infrared transmission spectra was converted based on the Lambert-Veil law to obtain the linear transmittance at a thickness of 1 mm.

As illustrated in FIG. 8, the linear transmittance of the test sample of Example 1 was 30% or more in the wavelength range of 3.54 µm to 5.64 µm, 40% or more in the wavelength range of 3.62 µm to 5.62 µm, and 50% or more in the wavelength range of 4.38 µm to 5.46 µm. Furthermore, the maximum linear transmittance of the test sample of Example 1 was 14.2% in the target wavelength range of more than 7 µm, and 25 µm or less. In addition, the maximum linear transmittance of the test sample of Example 1 was 1.0% in the target wavelength range of more than 7.5 µm, and 25 µm or more.

As illustrated in FIG. 9, the linear transmittance of Example 2 was 30% or more in the wavelength range of 3.52 µm to 5.66 µm, 40% or more in the wavelength range of 3.62 µm to 5.64 µm, and 50% or more in the wavelength range of 4.30 µm to 5.60 µm. Furthermore, the maximum linear transmittance of the test sample of Example 2 was 24.8% in the target wavelength range of more than 7 µm, and 25 µm or more. In addition, the maximum linear transmittance of the test sample of Example 2 was 7.2% in the target wavelength range of more than 7.5 µm, and 25 µm or more.

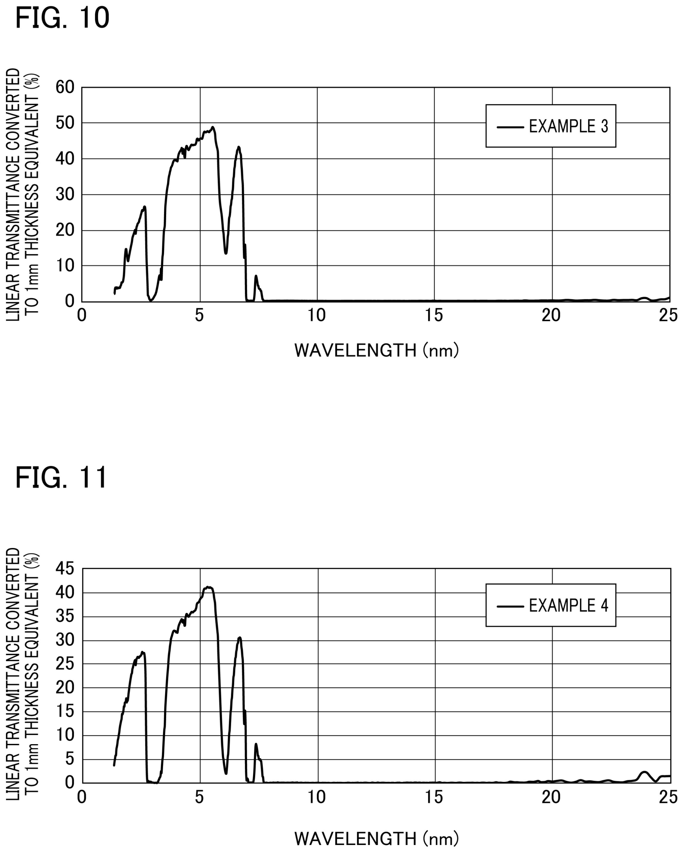

As illustrated in FIG. 10, the linear transmittance of Example 3 was 30% or more in the wavelength range of 3.58 µm to 5.82 µm, and 40% or more in the wavelength range of 4.06 µm to 5.76 µm. Furthermore, the maximum linear transmittance of the test sample of Example 3 was 7.1% in the target wavelength band of more than 7 µm, and 25 µm or less. In addition, the maximum linear transmittance of the test sample of Example 3 was 3.7% in the target wavelength band of more than 7.5 µm, and 25 µm or less.

As illustrated in FIG. 11, the linear transmittance of Example 4 was 30% or more in the wavelength range of 3.76 µm to 5.76 µm, and 40% or more in the wavelength range of 5.14 µm to 5.56 µm. Furthermore, the maximum linear transmittance of the test sample of Example 4 was 8.2%µm in the target wavelength band of more than 7 µm, and 25 µm or less. In addition, the maximum linear transmittance of the test sample of Example 4 was 5.1% in the target wavelength band of more than 7.5 µm, and 25 µm or less.

### Porosity

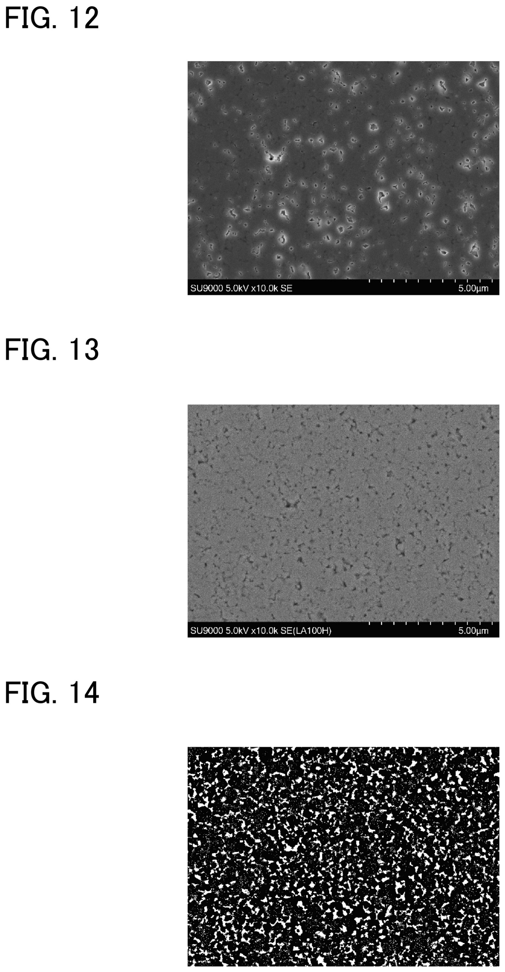

First, cross-section polishing (CP polishing) was performed on the cross section of the test sample of Example 1. Next, a secondary electron image and a reflected electron image of the cross section of the test sample were observed at a magnification of 10,000 using a scanning electron microscope (SEM). FIG. 12 is a secondary electron image of Example 1. FIG. 13 is a reflection electron image of Example 1.

Next, the reflection electron image obtained as described above was binarized to clarify the pore portion. FIG. 14 is a binarized image of the reflection electron image of Example 1. When the porosity was obtained by calculating an area rate of the pore portion having a pore diameter of 50 nm or more from the binarized image, the porosity was 15.12%.

When the bulk density was calculated from the mass and volume of the test sample of Example 1, the bulk density was 2.66 g/cm³. In addition, the relative density was about 85% based on the porosity calculated from the binarized image of the cross-sectional SEM image was about 15%, as described above. From this result, the true density of the material constituting the test sample was estimated to be about 3.13 g/cm³.

The bulk density calculated from the mass and volume of the test sample of Example 2 was 2.35 g/cm³. Since the true density of the test sample was close to that of Example 1, the relative density was calculated from the true density estimated in Example 1, and was about 75%. The porosity was calculated from the value of the relative density, and was about 25%.

A bulk density calculated from the mass and volume of the test sample of Example 3 was 2.54 g/cm³. Since the theoretical value of the true density was 2.92 g/cm³, the relative density was about 87%. The porosity was calculated from the value of the relative density, and was about 13%.

The bulk density calculated from the mass and volume of the test sample of Example 4 was 2.58 g/cm³. Since the theoretical value of the true density was 2.95 g/cm³, the relative density was about 87%. The porosity was calculated from the value of the relative density, and was about 13%.

### Pore Diameter

A pore diameter of Example 1 was determined from the binarized image in FIG. 14 when a cumulative value of the pore diameter distribution based on the area was 50% (d₅₀), and the pore diameter d50 was 175 nm. Since the test samples of Examples 2 to 4 were prepared using sodium hexafluoroaluminate (Na₃AlF₆) under the same conditions, it is estimated that the pore diameters of Examples 2 to 4 were also similar.

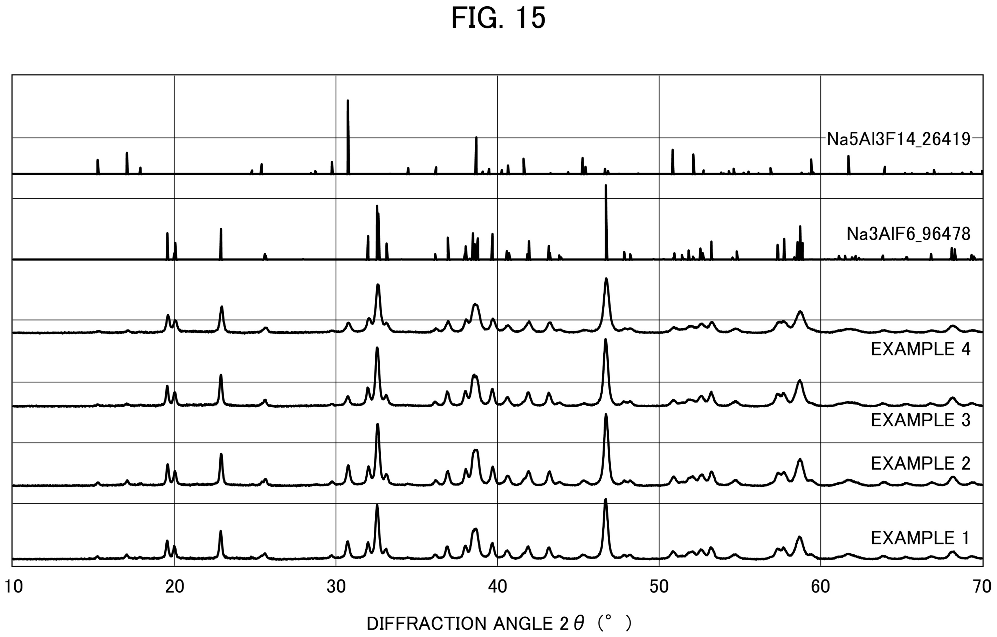

Next, powders obtained by pulverizing the test samples of the examples were measured using a powder X-ray diffraction (XRD) device, and an XRD pattern was obtained. The results are illustrated in FIG. 15. Rietveld analysis of the obtained XRD patterns showed that the mass rate of Na₃AlF₆ was 90.5% in Example 1, 90.6% in Example 2, 95.3% in Example 3, and 93.6% in Example 4.

As described above, it is understood that the test sample according to the present embodiment can be used as an optical filter suitable for an infrared sensor for detecting, for example, flames.

### Additional Notes

The description of the embodiments above discloses the following technologies.

### Technology 1:

An optical filter includes: a base material containing a continuous phase of a polycrystalline fluoride; and an absorbent dispersed in the base material, in which the optical filter contains 0.1 to 10% by mass of the absorbent that absorbs light in an infrared region of more than 7.5 µm, and 9 µm or less; a wavelength bandwidth of the optical filter having a linear transmittance of 30% or more per 1 mm thickness in a target wavelength band of 3 µm or more, and 7 µm or less, is 50 nm or more; a maximum linear transmittance of the optical filter per 1 mm thickness in a target wavelength band of more than 7.5 µm, and 25 µm or less, is 10% or less; the optical filter contains 80% by mass or more of an inorganic substance; the optical filter contains 50% by mass or more of a polycrystalline fluoride; a porosity of the optical filter is 30% or less; and a median pore diameter of the optical filter is 500 nm or less.

With this configuration, the optical filter 1 transmits infrared light in a specific region, and shields infrared light in another specific region. Therefore, the optical filter 1 is suitable for an infrared sensor for detecting a flame, for example.

### Technology 2:

The optical filter according to Technology 1, in which the fluoride includes a complex fluoride containing an alkali metal. Alkali metal fluoride has high solubility in water, but the complex fluoride containing an alkali metal has low solubility in water. Therefore, such an optical filter is not easily soluble in water, and has high water resistance.

### Technology 3:

The optical filter according to Technology 2, in which the complex fluoride includes a compound having a cryolite crystal structure. The complex fluoride having such a crystal structure is a material having a small refractive index anisotropy depending on the crystal orientation. Therefore, infrared transmission of the optical filter 1 can be improved.

### Technology 4:

The optical filter according to any one of Technologies 1 to 3, in which the absorbent contains a fluororesin. The fluororesin has C-F bonds, and absorbs light in a wavelength band of 8 µm to 9 µm. Therefore, light in a specific wavelength region as described above can be easily cut.

### Technology 5:

The optical filter according to Technology 4, wherein the fluororesin contains a resin including a perfluoroalkyl group. The fluororesin has many C-F bonds. Therefore, light in a specific wavelength region can be effectively cut easily.

### Technology 6:

An infrared sensor includes an optical filter according to any one of Technologies 1 to 5. With this configuration, the infrared sensor can easily detect, for example, flames.

### Technique 7:

A method of manufacturing an optical filter includes: a step of pressurizing a mixture containing a polycrystalline fluoride and an absorbent at a temperature of 250°C or lower, in which the optical filter contains 0.1 to 10% by mass of the absorbent that absorbs light in an infrared region of more than 7.5 µm, and 9 µm or less; a wavelength bandwidth of the optical filter having a linear transmittance of 30% or more per 1 mm thickness in a target wavelength band of 3 µm or more, and 7 µm or less, is 50 nm or more; a maximum linear transmittance of the optical filter per 1 mm thickness in a target wavelength band of more than 7.5 µm, and 25 µm or less, is 10% or less; the optical filter contains 80% by mass or more of an inorganic substance; the optical filter contains 50% by mass or more of a polycrystalline fluoride; a porosity of the optical filter is 30% or less; and a median pore diameter of the optical filter is 500 nm or less. With this configuration, the optical filter 1 can be manufactured at a low temperature, so that the absorbent is prevented from being altered by heat. Therefore, the optical filter 1 described above can be easily manufactured.

The entire contents of Japanese Patent Application No. 2023-112348 (filed on July 7, 2023) are incorporated herein by reference.

The present embodiments have been described above, but the present embodiments are not limited thereto, and various modifications are possible within the scope of the present embodiments.

### INDUSTRIAL APPLICABILITY

According to the present disclosure, it is possible to provide an optical filter suitable for an infrared sensor for detecting flames, for example, an infrared sensor using the optical filter, and a method of manufacturing an optical filter.

### REFERENCE SIGNS LIST

1 Optical filter
10 Base material
11 Continuous phase
20 Absorbent

## Claims

1. An optical filter comprising:
a base material containing a continuous phase of a polycrystalline fluoride; and
an absorbent dispersed in the base material, wherein
the optical filter contains 0.1 to 10% by mass of the absorbent that absorbs light in an infrared region of more than 7.5 µm, and 9 µm or less,
a wavelength bandwidth of the optical filter having a linear transmittance of 30% or more per 1 mm thickness in a target wavelength band of 3 µm or more, and 7 µm or less, is 50 nm or more,
a maximum linear transmittance of the optical filter per 1 mm thickness in a target wavelength band of more than 7.5 µm, and 25 µm or less, is 10% or less,
the optical filter contains 80% by mass or more of an inorganic substance,
the optical filter contains 50% by mass or more of a polycrystalline fluoride,
a porosity of the optical filter is 30% or less, and
a median pore diameter of the optical filter is 500 nm or less.

2. The optical filter according to claim 1, wherein the fluoride includes a complex fluoride containing an alkali metal.

3. The optical filter according to claim 2, wherein the complex fluoride includes a compound having a cryolite crystal structure.

4. The optical filter according to any one of claims 1 to 3, wherein the absorbent contains a fluororesin.

5. The optical filter according to claim 4, wherein the fluororesin contains a resin including a perfluoroalkyl group.

6. An infrared sensor comprising an optical filter according to any one of claims 1 to 5.

7. A method of manufacturing an optical filter comprising a step of pressurizing a mixture containing a polycrystalline fluoride and an absorbent at a temperature of 250°C or lower, wherein
the optical filter contains 0.1 to 10% by mass of the absorbent that absorbs light in an infrared region of more than 7.5 µm, and 9 µm or less,
a wavelength bandwidth of the optical filter having a linear transmittance of 30% or more per 1 mm thickness in a target wavelength band of 3 µm or more, and 7 µm or less, is 50 nm or more,
a maximum linear transmittance of the optical filter per 1 mm thickness in a target wavelength band of more than 7.5 µm, and 25 µm or less, is 10% or less,
the optical filter contains 80% by mass or more of an inorganic substance,
the optical filter contains 50% by mass or more of a polycrystalline fluoride,
a porosity of the optical filter is 30% or less, and
a median pore diameter of the optical filter is 500 nm or less.
